Europäisches Patentamt

European Patent Office

Office européen des brevets

(11) Veröffentlichungsnummer: **0 429 703 A1**

## EUROPÄISCHE PATENTANMELDUNG

(21) Anmeldenummer: 89121995.8

(51) Int. Cl.⁵: **G21C 3/322**

(22) Anmeldetag: 29.11.89

(43) Veröffentlichungstag der Anmeldung:
05.06.91 Patentblatt 91/23

(84) Benannte Vertragsstaaten:
CH DE ES LI SE Patentblatt 10/

(71) Anmelder: Siemens Aktiengesellschaft
Wittelsbacherplatz 2
W-8000 München 2(DE)

(72) Erfinder: Lippert, Hans-Joachim
Am Galgenberg 17
W-8552 Höchstadt(DE)
Erfinder: Rink, Roland
Markplatz 10
W-8742 Bad Königshofen(DE)
Erfinder: Übelhack, Walter, Dr., Dipl.-Phys.
Daisbachstrasse 3
W-6272 Niedernhausen(DE)

(54) Brennelement für einen Siedewasserreaktor.

(57) Bei den Brennelementen eines Siedewasserreaktors sind im Inneren eines Brennelementkastens Innenwände (IW) angeordnet, die zur Verringerung der Wandstärke des Kastens als Verstärkungswände gegenüberliegende Kastenwände miteinander verbinden und/oder zur Verbesserung des Neutronenflusses im Verdampfungsraum des Brennelementes einen Kanal für nicht-siedendes Wasser bilden. Zur Verbesserung der Kühlung sind im Verdampfungsraum Quernuten (N,NK) in den den Brennstäben zugewandtenseitenflächen der Innenwände vorgesehen, die als Filmabstreifer ("flow tripper") wirken.

FIG 10

## BRENNELEMENT FÜR EINEN SIEDEWASSERREAKTOR

Die Erfindung betrifft ein Brennelement für einen Siedewasserreaktor mit Brennstäben, die parallel zueinander im Inneren eines langgestreckten Brennelementkastens angeordnet sind und mit sich in Längsrichtung zwischen den Brennstäben erstreckenden Innenwänden. Die Erfindung betrifft ferner einen Siedewasserreaktor mit einem derartigen Brennelement.

Bei der Auslegung eines Brennelementes sind verschiedene, einander teilweise wiedersprechende Bedingungen zu berücksichtigen, um die Erzeugung und den Fluß termischer Neutronen zu optimieren, die Dampferzeugung an den aktiven Brennstäben zu steigern, dabei eine ausreichende mechanische Stabilität und Korrosionsfestigkeit zu gewährleisten und andere Einflüsse (z.B. Korrosion oder termische Veränderungen) auszuschalten.

Die den Kernbrennstoff, z.B. Urandioxyd oder Uran-Plutonium-Mischoxyde enthaltenden Brennstäbe sind von mechanischen Aufbauten gehalten, die gleichzeitig auch die Führung des Wasser- und Dampfstromes übernehmen und das sogenannte Skelett der Brennelemente bilden. Die Brennstäbe sind dabei in Längsrichtung parallel zueinander im Inneren eines Brennelementkastens angeordnet, der sich in Längsrichtung zwischen einem Fußteil und einem Kopfteil erstreckt und von Wasser durchströmt wird, das durch Öffnungen des Fußteiles eintritt, unter teilweiser Verdampfung entlang der Brennstäbe strömt, an den heißen Staboberflächen weitgehend verdampft und als Wasser/Dampf-Gemisch durch Austrittsöffnungen des Kopfteils austritt.

Um an den Brennstäben einen hohen Wärmeübergang mit einer hohen Siedeleistung bei möglichst gleichmäßiger Kühlung zu erreichen, wird entlang der Längsachse des Kastens ein eine Strömung mit einem Druckunterschied aufrecht erhalten, wozu in dem von den Austrittsöffnungen über die Dampfturbine zu den Eintrittsöffnungen des Kastens führenden, geschlossenen Wasserkreislauf entsprechende Fördereinrichtungen vorgesehen sind. Außerhalb des Kastens befindet sich nicht-siedendes Wasser zum Abbremsen der Neutronen und ein steuerbarer Absorber zur Steuerung der Neutronenbilanz. Um innerhalb der aktiven Zone des Reaktors die Neutronenabsorption gering zu halten, ist dort für die Skeletteile und insbesondere für den Brennelementkasten ein spezielles Material, in der Regel eine Zirkoniumlegierung, verwendet, die aber eine geringe mechanische Festigkeit aufweist. Der Druckunterschied zwischen dem Kasteninneren und dem Äußeren kann daher den Kasten leicht ausbeulen.

Zur Verbesserung des Neutronenflusses werden häufig einige der für die Brennstäbe vorgesehenen Positionen im Kasteninneren durch sogenannte "Wasserstäbe" ersetzt, d.h. Kanäle in der Form von Brennstäben, die aber nicht-siedendes Wasser führen. Es ist bei einem Kasten mit quadratischem Querschnitt auch schon vorgeschlagen worden (deutsches Gebrauchsmuster 88 02 565.9) einen Wasserkanal zu verwenden, dessen Querschnitt die Form eines regelmäßigen Polygons, insbesondere eines Quadrats aufweist. Die Wasserkanäle sind also durch im Inneren des Kastens parallel zu den Brennstäben verlaufende Innenwände seitlich gegenüber den Brennstäben abgeschlossen. Dabei kann es vorteilhaft sein, im Zwischenraum zwischen diesen Kanälen und den Kastenwänden Strömungsleitflächen anzuordnen, die eine gleichmäßige Strömung und eine Verwirbelung von Dampfblasen und Flüssigkeitströpfchen bewirken sollen, um die Brennstäbe gleichmäßig mit Wasser zu beaufschlagen. Diese Strömungsleitflächen können insbesondere an gitterförmigen Strukturen angebracht sein, die als Abstandhalter für die Brennstäbe dienen.

In der nicht-vorveröffentlichten europäischen Patentanmeldung 89 119 176.9 ist vorgeschlagen, zur Erhöhung der mechanischen Stabilität Innenwände im Kasten vorzusehen, die gegenüberliegende Kastenwände miteinander verbinden. Dabei ist es vorteilhaft, wenn diese Innenwände zusammen mit den Abstandhaltern, den Brennstäben und entsprechenden Befestigungselementen für die Brennstäbe im Kopfteil und Fußteil als ein Bauteil ausgeführt ist, das gegenüber der Kastenwand verschiebbar ist, sodaß der Kasten bei Inspektionen vom Brennelement abgezogen werden kann.

Um die verschiedenen Anforderungen an ein Brennelement zu optimieren, ist in der US-Patentschrift 4 749 543 für die Außenflächen des Kastens ein Profil vorgeschlagen, das an den Ecken des quadratischen Kastens eine verstärkte Kastenwand und vor allem im unteren Kastenteil Wandverstärkungen bildet, die in Längsrichtung und/oder Querrichtung verlaufen. Dank dieser Verstärkungen reicht dann in den zwischen den Verstärkungen liegenden Bereichen eine relativ geringe Wanddikke aus, so daß insgesamt weniger neutronen-absorbierendes Material für den Kasten erforderlich wird.

Zusätzlich sind an den Innenflächen der Kastenwände senkrecht zur Strömungsrichtung verlaufende Nuten eingefräst, die zu einer Vergrößerung des Strömungsquerschnittes führen und daher einem durch die Volumenvergrößerung beim Verdampfen erhöhten Druck entgegenwirken. Die obere Kante der Nuten ist dabei als eine schmale, zur Strömungsrichtung senkrechte Fläche ausgebildet, damit ein an der Wand entlang kriechender Wasserfilm dort abgelöst und in das Kasteninnere gelenkt wird ("flow tripper").

Der Erfindung liegt die Aufgabe zugrunde, in einem Siedewasserreaktor die Siedeleistung des Brennelementes zu erhöhen.

Die Erfindung geht dabei davon aus, daß bei einer Variante der Erfindung durch Innenwände, die einen nicht-siedendes Wasser führenden Kanal seitlich gegenüber den Brennstäben abgrenzen, der Fluß termischer Neutronen vor allem auch im oberen Bereich des Brennelementes gesteigert wird. Dort sind die Brennstäbe weitgehend von Wasserdampf umgeben, der die beim Zerfall entstehenden Neutronen nur unzureichend abbremsen kann. In diesen Kanälen, die keine Brennstäbe enthalten, ist dagegen durch einen entsprechenden Strömungsquerschnitt und eine geeignete Strömungsgeschwindigkeit sichergestellt, daß die durch die Kanalwand eintretende konvektive Wärme abgeführt wird, ohne daß es in den Kanälen zur Dampfbildung kommt. Das nicht-siedende Wasser in diesen Kanälen verbessert daher die Verteilung der termischen Neutronen. Diese führt aber nur zu einer erhöhten Heizleistung im oberen Teil des Brennelementes, wenn den Brennstäben dort auch genügend Wasser zum Verdampfen zugeführt wird.

Diese Zufuhr von flüssigem Wasser zu den Brennstäben wird aber dadurch erschwert, daß ein beträchtlicher Teil des in das Brennelement am Fuß eintretenden Wassers einen Flüssigkeitsfilm an den Kanalwänden bildet und daher nicht mit den Brennstäben in Berührung kommt. Daher sind bei dieser Variante zumindest in dem erwähnten oberen Teil des Brennelementes an den den Brennelementen zugewandten Flächen der die Wasserkanäle bildenden Innenwände Nuten angebracht, die quer zu den Stäben, also quer zur Strömungsrichtung verlaufen.

Der Neutronenfluß kann aber auch dadurch erhöht werden, daß die Dicke der Kastenwände verringert und damit auch die Gesamtmenge an neutronen-absorbierendem Material verkleinert wird. Um auch bei geringer Wandstärke eine ausreichende Stabilität der Kastenwände sicherzustellen, sind daher bei einer anderen Variante der Erfindung Innenwände vorgesehen, die jeweils gegenüberliegende Kastenwandteile miteinander verbinden. Aber auch an diesen, der Verstärkung dienenden Innenwänden bildet sich ein Flüssigkeitsfilm, durch den im oberen, dampfführenden Teil des Brennelementes der Prozentsatz des Wassers, das in flüssiger Form mit den Brennstäben in Berührung kommen kann, verringert wird. Entsprechende Nuten in diesen Verstärkungswänden lassen einen an ihnen entlangkriechenden Flüssigkeitsfilm abreißen und verwirbeln ihn derart mit dem vorbeiströmenden Wasser/Dampf-Gemisch, daß auch dadurch die Siedeleistung des Brennelementes erhöht wird.

Gemäß der Erfindung tragen also bei einem Brennelement, das gemäß den Merkmalen des Oberbegriffs des Anspruchs 1 sich in Längsrichtung zwischen den Brennstäben erstreckende Innenwände besitzt, wenigstens ein Teil der den Brennelementen zugewandten Seitenflächen der Innenwände Nuten, die senkrecht zu den Längsachsen der Brennstäbe verlaufen. Vorteilhafte Weiterbildungen der Erfindung sind in den Unteransprüchen angegeben und werden anhand von bevorzugten Ausführungsbeispielen und 16 Figuren näher erläutert.

Es zeigen:
Fig. 1 das Prinzip eines Siedewasserreaktors,
Fig. 2 den schematischen Aufbau eines Brennelementes,
Fig. 3 bis Fig. 5 den Querschnitt eines Brennelementes mit Kanäle bildenden Innenwänden,
Fig. 6 den Querschnitt eines Brennelementes mit Verstärkungen bildenden Innenwänden,
Fig. 7 und Fig. 8 Kanalquerschnitte mit Verstärkungswänden und Kanalwänden,
Fig. 9 und Fig. 10 den Einfluß von Nuten auf die Strömung von Wasserdampf und Wassertröpfchen an einer Wand,
Fig. 11 und Fig. 12 Kanalquerschnitte nach der Erfindung,
Fig. 13 Nutenformen an Kanalwänden,
Fig. 14 Nutenformen an Verstärkungswänden,
Fig. 15 und Fig. 16 Details bevorzugter Brennelemente.

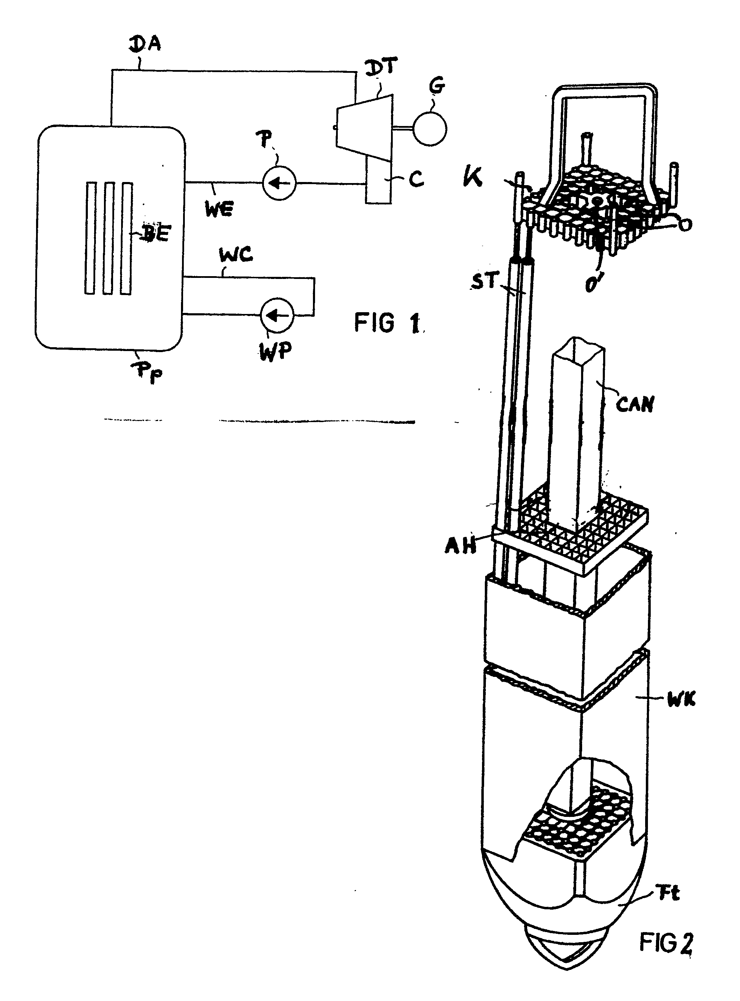

Ein Siedewasserkernreaktor besitzt nach Fig. 1 einen Druckbehälter Pp, indem sich ein Reaktorkern mit vertikal angeordneten Brennelementen BE befindet. Eine Dampf-Austrittsleitung DA führt zu einer Dampfturbine DT, die einen Generator G antreibt. Das in einem Kondensator C kondensierte Wasser wird über eine Speisewasserpumpe P einer Wassereintrittsleitung WE des Druckbehälters zugeführt.

Auch das in den Brennelementen nicht-verdampfte Wasser wird über einen Wasserkreislauf WC und eine Kühlmittelpumpe WP umgepumpt.

Die im Druckbehälter befindlichen Brennelemente BE enthalten vertikal angeordnete Stäbe ST (Fig. 2), die unten in einem Fuß Ft und oben in einem Kopfteil K gehalten und seitlich von einem Wasserkasten WK umgeben sind. Am Kopfteil K sind Austrittsöffnungen P für Wasser/Dampf-Gemisch erkennbar, das über weitere nicht-dargestellte Bauteile (z.B. zum Trocknen des Dampfes) in einem geschlossenen Kreislauf an die Dampfturbine DT angeschlossen sind. Entsprechende Eintrittsöffnungen am Fußteil sind nicht sichtbar.

Die Brennstäbe sind im Kasten durch Abstandhalter AH fixiert, die sich in Querrichtung zwischen den Brennstäben erstrecken. Während Fig. 2 nur einen Abstandhalter zeigt, sind normalerweise etwa 5 bis 7 derartige Abstandhalter in annähernd gleichmäßigen Abständen hintereinander im Kasten angeordnet.

Bevorzugt erstreckt sich in Längsrichtung des Kastens ein Wasserkanal CAN für nicht-siedendes Wasser, der über entsprechende Eintrittsöffnungen im Fuß F und eine entsprechende Austrittsöffnung O' im Kopf K an den Kreislauf der Pumpen P und WP angeschlossen ist.

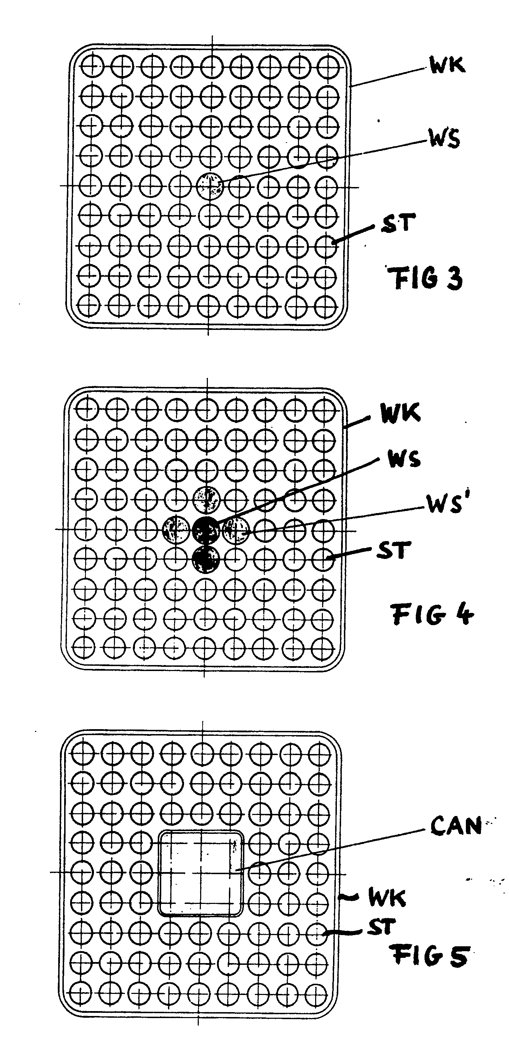

Beim Querschnitt durch den Wasserkasten WK in Fig. 3 sind die Brennelemente in den Maschen eines regelmäßigen, rechtwinkeligen Gitters angeordnet, wobei 9 x 9 Positionen für die Brennstäbe FT entstehen. Im Zentrum des Brennelementes ist aber anstelle eines Brennstabes ein Wasserkanal ange ordnet, der in diesem Fall aus einer rohrförmigen Innenwand im Kasten gebildet ist (sogenannter "Wasserstab" WS).

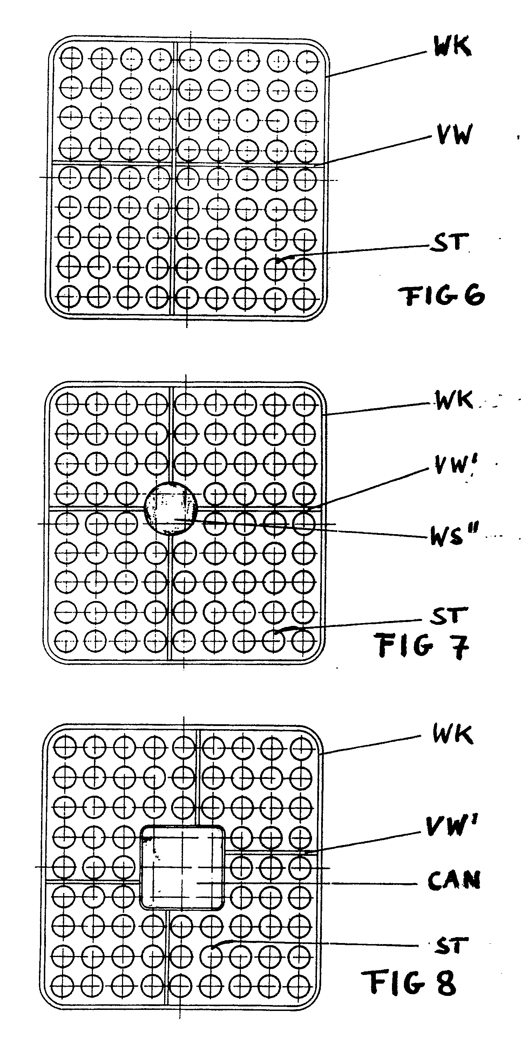

Im Fall der Fig. 4 besitzt der Kasten, für den vorteilhaft ein polygonaler Querschnitt gewählt wird, ebenfalls einen quadratischen Querschnitt. Jedoch sind in diesem Fall mehrere Innenwände mit entsprechenden Wasserstäben WS, WS' vorgesehen. Hier verbleiben nur 9 x 9 - 5 Positionen für die Brennstäbe ST.

Besonders vorteilhaft hat sich ein Wasserkanal CAN mit dem bereits in Fig. 2 gezeigten, quadratischen Querschnitt erwiesen. Gemäß Fig. 5 können sich dabei 9 x 9 - 9 Brennstäbe ST ergeben.

Gemäß Fig. 6 sind bei einer anderen bevorzugten Ausführungsform gegenüberliegende Wände des Kastens durch Innenwände miteinander verbunden, die bei polygonalem Querschnitt jeweils zu Kastenwänden parallel sind. Bei der quadratischen Form der Fig. 6 ergibt sich dabei eine kreuzförmige Struktur der verstärkenden Innenwände VW. Derartige verstärkende Innenwände VW erlauben dem Brennelement trotz verhältnismäßig dünner Kastenwände WK einen hohen Förderdruck für das Wasser, dessen erhöhte Strömungsgeschwindigkeit somit zu einer erhöhten Dampfbildung führen kann. Um Druckunterschiede in den einzelnen Quadranten des Kastens auszugleichen, können an den Verstärkungswänden VW, die sich in Längsrichtung praktisch über die gesamte Kastenlänge erstrecken, Perforationen oder andere Durchlässe vorgesehen sein.

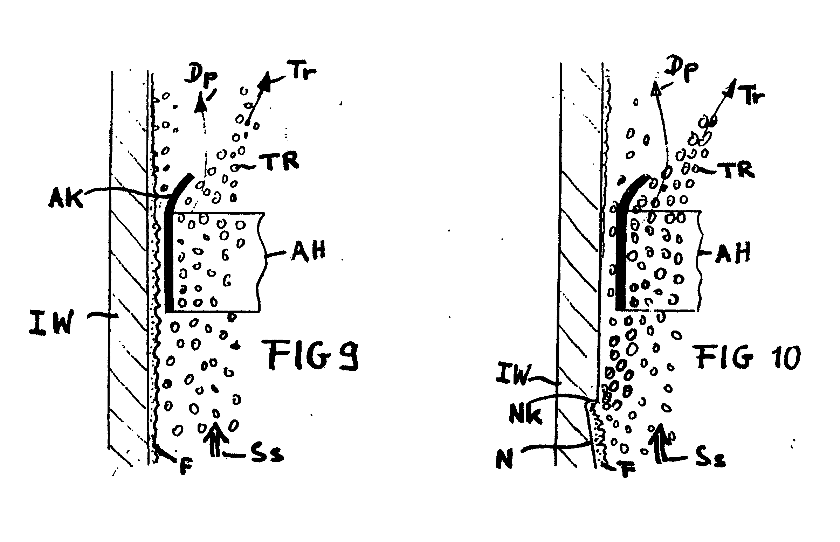

Auch beim Querschnitt nach Fig. 7 sind im Kasteninneren Innenwände vorgesehen, die aber zum Teil einen (hier verhältnismäßig großen) Wasserstab WS" bilden, zum Teil als Verstärkungswände VW' ausgebildet sind, die die gegenüberliegenden Kastenwände über den Wasserstab miteinander verbinden. Im Gegensatz zu den Figuren 3 bis 5 ist der vom Wasserstab WS" gebildete Wasserkanal nicht streng zentral im Kasten angeordnet, sondern seitlich etwas verschoben.

Fig. 8 zeigt einen zentralen, von einem Teil der Innenwände gebildeten Wasserkanal CAN, der entsprechend Fig. 7 über einen anderen Teil der Innenwände, die als Verstärkungswände VW' dienen, mit den Kastenwänden verbunden ist.

In Fig. 9 ist eine Innenwand IW, also z.B. die Wand der Kanäle oder Wasserstäbe bzw. eine Verstärkungswand, im Längsschnitt dargestellt. Der Pfeil SS gibt die Strömungsrichtung an, mit der im unteren Teil des Brennelementes das Wasser und im oberen Teil ein Wasserdampf/Wassertröpfchen-Gemisch an der den Brennstäben zu gewandten Seitenfläche der Innenwand IW entlangströmt. An der Innenwand IW, die aus dem kühleren unteren Teil des Brennelementes in den oberen, dampfführenden Raum des Brennelementes ragt und ggf. durch das im Kanal strömende nicht-siedende Wasser zusätzlich gekühlt ist, kommt es zu keiner Verdampfung. Vielmehr kriecht dort Wasser in Form eines Filmes F nach oben.

Mit AH ist der Steg eines Abstandhalters bezeichnet, dessen Längsseite eine Kante AK aufweist, die als Strömungsleitfläche ausgebildet ist und derart in den Dampf-Strom ragt, daß die im Strom enthaltenen Tröpfchen TR aus ihrer horizontalen Strömungsrichtung abgelenkt und in die Richtung der Brennelemente geschleudert werden. Dadurch entsteht eine teilweise Trennung der Tröpfchen-Stromes Tr von dem in Richtung des Pfeiles Dp strömenden Wasserdampf und den Brennstäben wird mehr Flüssigwasser zugeführt.

Diese Trennungswirkung wird erhöht, wenn den Abstandshaltern AH bzw. deren zu Leitflächen geformten Kanten AK die erfindungsgemäßen Nuten N in Strömungsrichtung vorgelagert sind (Fig. 10). Diese Nuten N wirken als "Filmabstreifer" ("flow tripper") für den Flüssigkeitsfilm. Sie weisen bevorzugt Kanten mit schmalen Flächen Nk auf, die senkrecht zur Strömungsrichtung stehen.

Trifft daher der nach oben kriechende Flüssigkeitsfilm F auf diese Flächen Nk, so reißt er ab und wird in Form von Tröpfchen von dem vorbeiströmenden Medium mitgerissen. Dadurch erhöht sich der Anteil der Tröpfchen im Medium, so daß nun auch entsprechend mehr Tröpfchen auf die Brennelemente in Richtung des Pfeiles Tr gelenkt werden.

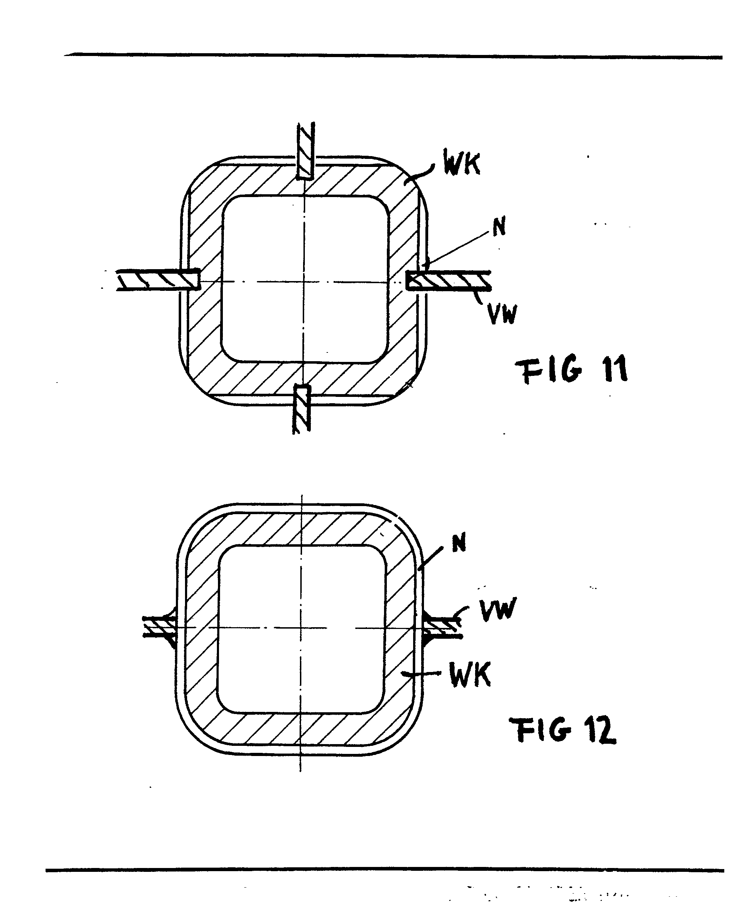

Die erfindungsgemäßen Nuten N können auf eine rohrförmige Wand durch Drehen eingebracht werden. Besitzt eine den Wasserkanal bildende Innenwand dagegen ebene Flächen, so können sie durch Fräsen in diese ebenen Flächen eingebracht werden. Dies zeigt Fig. 11 für einen quadratischen Kanalquerschnitt mit abgerundeten Ecken. Dabei ergibt sich eine einfache Fertigung, wenn beim Einfräsen der Nuten N die abgerundeten Ecken ausgespart werden. Es kann aber, wie Fig. 12 zeigt, auch eine von dem ganzen Kanal umlaufende Nut eingefräst werden.

Sofern der Kanal mit den erwähnten Verstärkungswänden VW′ mit den Kastenwänden verbunden ist, können diese Verstärkungswände VW′ in Ausnehmungen, die in die Kanalwand eingefräst sind, eingesetzt und dort verschweißt werden (Fig. 11). Die Verstärkungswände VW können aber auch stumpf auf die Außenfläche des Kanals aufgesetzt und z.B. durch eine Schweißnaht S befestigt werden. Wie Fig. 12 zeigt, ist bei dieser Ausführungsform im Bereich der Nut der Kontakt zwischen den Verstärkungswänden VW′ und dem Kanal unterbrochen.

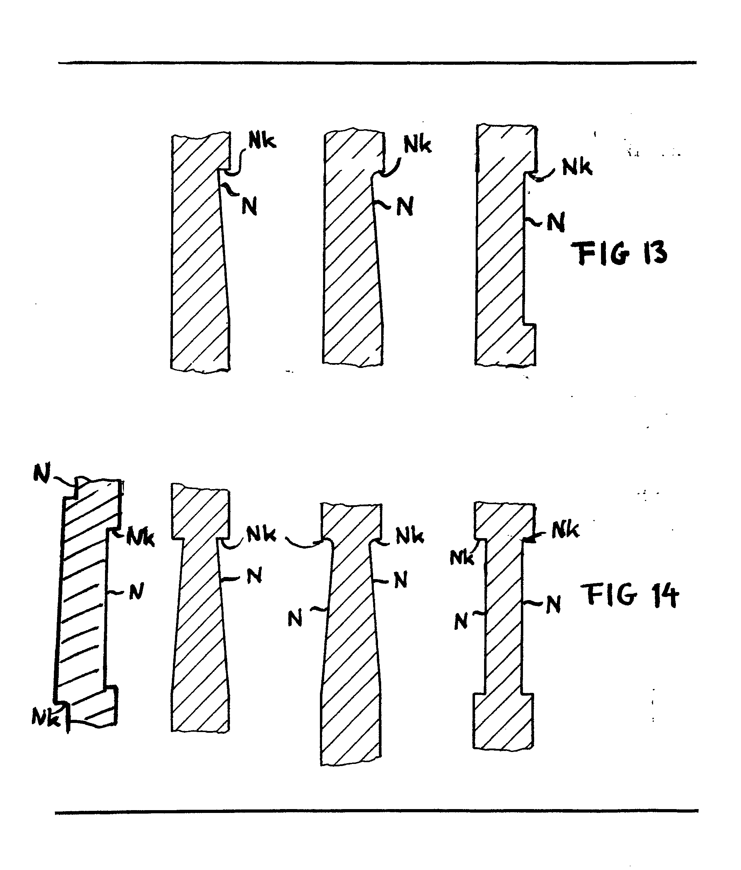

Handelt es sich bei den die Nuten N tragenden Innenwänden um die Wände der erwähnten Wasserstäbe oder Wasserkanäle, so tragen nur die den Brennelementen zugewandten Seitenflächen die erfindungsgemäßen Nuten. Fig. 13 zeigt Längsschnitte durch entsprechende Kanalwände bei verschiedenen Nutenformen. Vorteilhaft sind die Nuten so geformt, daß sich die Kanalwand in Strömungsrichtung stetig verjüngt, bis die erwähnte schmale Kantenfläche Nk erreicht ist. Der Übergang kann dabei nahezu rechtwinkelig oder abgerundet (Mitte in Fig. 13) ausgeführt sein. Ist der obere Nutrand derart als Abrißkante ausgebildet, so erhalten die beim Filmabriß entstehenden Tröpfchen eine Geschwindigkeitskomponente, die auf die Brennstäbe gerichtet ist, so daß den Brennstäben mehr Flüssigwasser zum Sieden zugeführt wird.

Wie rechts in Fig. 13 dargestellt ist, kann auch die Unterkante der Nuten entsprechend ausgebildet werden. Derartige Nuten können leichter zu fräsen sein und bereits an der Unterkante einen Filmabriß hervorrufen. Andererseits ist zu bedenken, daß jede Kante den Strömungswiderstand im Brennelement erhöht.

Fig. 14 zeigt, wie bei einer Verstärkungswand vorteilhaft an beiden Seiten entsprechende Nuten angebracht werden können. Werden die beiden Nuten jeweils in einem vorgegebenen optimalen Abstand vor den erwähnten Abstandshaltern angebracht, so liegen sie sich praktisch gegenüber. Dadurch ergibt sich eine an dieser Stelle erheblich verminderte Wanddicke. In Fig. 14 ist ganz links eine besonders fertigungsfreundliche Ausführungsform der Verstärkungswände dargestellt, bei der die auf den beiden Seiten angeordneten Nuten gegeneinander versetzt sind, so daß sich eine annähernd konstante Wanddicke ergibt.

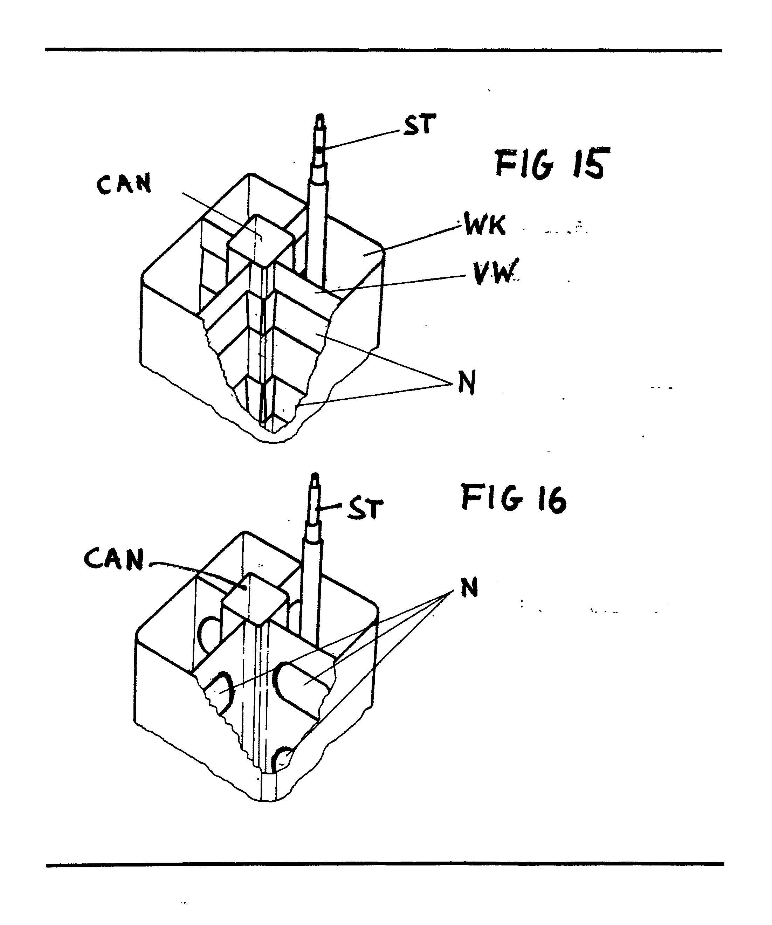

Die Nuten können in die Kanalwände und Verstärkungswände bereits eingebracht werden, bevor diese Innenwände zu einer entsprechenden "Wasserstruktur" zusammengebaut werden. Dabei ergibt sich eine Struktur, wie sie in Fig. 15 schematisch dargestellt ist. Der Filmabstreifer läuft als durchgehende Nut über die Seitenflächen der Verstärkungswände und die verbleibenden freien Außenflächen der Kanalwände.

Fertigungstechnisch ist es häufig einfacher, die Nut nicht durchgehend auszuführen. In Fig. 16 sind die Seitenbereiche der Verstärkungswände nutenfrei ausgeführt. Dabei kann es sich durch Fertigung ergeben, daß die entsprechenden Seitenenden der Nuten rundförmig sind. In manchen Fällen kann darauf verzichtet werden, auch in den Wänden des Wasserkanals Nuten vorzusehen.

Selbstverständlich können auch die Innenflächen des Kastens mit entsprechenden Nuten versehen werden.

Während also die Innenwände durch Verstärkung des Kastens geringere Wandstärken der Kastenwände ermöglichen und/oder durch Bildung eines Wasserkanals für nicht-siedendes Wasser den Neutronenfluß verbessern, ermöglichen es die erfindungsgemäßen Nuten, die störende Filmbildung an derartigen Innenwänden zu vermeiden und vor allem im oberen Bereich, wo der sich bildende Dampf die Kühlung der Brennstäbe vermindert, die Kühlmittelzufuhr zu den Stäben zu erhöhen. Das erfindungsgemäße Brennelement kann daher auf eine erhöhte Siedeleistung ausgelegt werden.

## Ansprüche

1. Brennelement für einen Siedewasserreaktor mit Brennstäben (ST), die parallel zueinander im Inneren eines langgestreckten Brennelementkastens (WK) angeordnet sind, und mit sich in Längsrichtung erstreckenden Innenwänden (CAN, VW), **dadurch gekennzeichnet,** daß den Brennelementen zugewandte Seitenflächen der Innenwände Nuten (N) tragen, die senkrecht zu der Längsachse der Brennstäbe verlaufen.

2. Brennelement nach Anspruch 1, **dadurch gekennzeichnet,** daß die Innenwände mindestens einen gegenüber den Brennstäben seitlich abgeschlossenen Wasserkanal für nicht-siedendes Wasser bilden.

3. Brennelement nach Anspruch 2, **dadurch gekennzeichnet,** daß die Nuten um den Wasserkanal auf seiner Außenseite durchgehend umlaufen.

4. Brennelement nach Anspruch 2, **dadurch gekennzeichnet,** daß die Nuten auf ebenen Außenflächen des Wasserkanals angebracht sind.

5. Brennelement nach Anspruchs 1, **dadurch gekennzeichnet,** daß mehrere Innenwände vorgesehen sind, die gegenüberliegende Wände des Kastens miteinander verbinden und daß beide Seitenflächen dieser Innenwände Nuten tragen.

6. Brennelement nach Anspruch 5, **dadurch gekennzeichnet,** daß die Nuten einer Innenfläche jeweils bis zu den zu den Längsachsen parallelen Seiten der Innenwand verlaufen.

7. Brennelement nach Anspruch 5, **dadurch gekennzeichnet,** daß die Nuten einer Innenwand bereits vor den zur Längsachse parallelen Seiten der Innenwand in einer Rundung enden.

8. Brennelement nach einem der Ansprüche 1 bis 7, **dadurch gekennzeichnet,** daß der Kasten einen polygonalen, insbesondere quadratischen Querschnitt aufweist und daß mehrere Innenwände vorgesehen sind, die jeweils parallel zu den Seitenwänden des Kastens ausgerichtet sind, jeweils zwei gegenüberliegende Kastenwände miteinander verbinden und auf allen den Brennstäben zugewandten Seitenflächen Nuten tragen.

9. Brennelement nach Anspruch 1, **dadurch gekennzeichnet,** daß der Querschnitt des Kastens die Form eines regelmäßigen Polygons, insbesondere eines Quadrates aufweist, daß ein erster Teil der Innenwände einen im Zentrum oder wenigstens ungefähr im Zentrum des Kastens verlaufenden, seitlich gegenüber den Brennstäben abgeschlossenen Wasserkanal für nicht-siedendes Wasser bildet und daß ein zweiter Teil der Innenwände jede Seitenwand des Kastens mit dem Wasserkanal verbindet, und daß mindestens der zweite Teil der Innenwände auf allen den Brennstäben zugewandten Flächen Nuten tragen.

10. Brennelement nach einem der Ansprüche 1 bis 9, **dadurch gekennzeichnet,** daß die Nuten zur Längsrichtung senkrechte Schmalseiten aufweisen.

11. Brennelement nach einem der Ansprüche 1 bis 10 mit einem Eintrittsöffnungen für Siedewasser enthaltenden Fußteil am unteren Ende des Brennelementkastens und einem Austrittsöffnungen für Siedewasser und Dampf enthaltenden Kopfende am oberen Teil des Brennelementkastens, und mit mehreren in Längsrichtung im Abstand voneinander angeordneten Abstandhaltern, die quer zur Längsrichtung zwischen den Brennelementen verlaufende Stege besitzen, wobei die Nuten nur im oberen Teil des Brennelementes vorgesehen und in Strömungsrichtung des Siedewassers einem Abstandhalter vorgelagert sind.

12. Siedewasserreaktor mit mehreren parallel zueinander angeordneten Brennelementen nach einem der Ansprüche 1 bis 11, die in einem Druckbehälter angeordnet sind, der in einem eine Dampfturbine enthaltenden Kreislauf für Siedewasser liegt, wobei die Brennstäbe im Inneren des Brennelementkastens in Längsrichtung von dem Siedewasser umspült werden.

FIG 1

FIG 2

FIG 3

FIG 4

FIG 5

FIG 6

FIG 7

FIG 8

EP 0 429 703 A1

Dp

Tr

TR

AK

AH

IW

FIG 9

F

Ss

Dp

Tr

TR

AH

IW

NK

N

F

FIG 10

Ss

WK

N

VW

FIG 11

N

VW

WK

FIG 12

FIG 13

FIG 14

FIG 15

FIG 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| E | EP-A-346657 (GENERAL ELECTRIC)<br>* Spalte 3, Zeilen 43 - 49 *<br>* Spalte 4, Zeilen 38 - 43 *<br>* Spalte 5, Zeile 57 - Spalte 6, Zeile 20 *<br>* Spalte 8, Zeilen 6 - 25 *<br>* Spalte 9, Zeile 46 - Spalte 10, Zeile 8;<br>Anspruch 6; Figuren 2-3 *<br>--- | 1-2, 4,<br>11-12 | G21C3/322 |
| D,X | US-A-4749543 (CROWTHER ET AL.)<br>* Spalte 3, Zeilen 11 - 22 *<br>* Spalte 4, Zeilen 6 - 9 *<br>* Spalte 9, Zeile 42 - Spalte 10, Zeile 8;<br>Anspruch 6; Figuren 9, 13-14a * | 1, 7,<br>10, 12 | |
| Y | | 2, 4-6,<br>8-9, 11 | |
| Y | US-A-4666664 (DOSHI)<br>* Spalte 2, Zeilen 39 - 47 *<br>* Spalte 3, Zeile 55 - Spalte 4, Zeile 5;<br>Figuren 2-3 *<br>--- | 2, 4-6,<br>8-9, 11 | |
| A | GB-A-2208749 (UKAEA)<br>* Seite 3, Zeile 16 - Seite 21 *<br>* Seite 5, Zeilen 19 - 26; Figuren 3-4 *<br>--- | 1, 3, 10 | RECHERCHIERTE SACHGEBIETE (Int. Cl.5 )<br><br>G21C |
| A | DE-A-3533317 (KWU)<br>* Spalte 2, Zeile 60 - Spalte 3, Zeile 2 *<br>* Spalte 3, Zeilen 17 - 38 *<br>* Spalte 4, Zeilen 18 - 30; Figuren 1, 4 *<br>----- | 5, 8-9 | |

Der vorliegende Recherchenbericht wurde für alle Patentansprüche erstellt

| Recherchenort | Abschlußdatum der Recherche | Prüfer |
|---|---|---|
| DEN HAAG | 09 JULI 1990 | CAPOSTAGNO E. |

EPO FORM 1503 03.82 (P0403)